# EUROPÄISCHE PATENTSCHRIFT

(11) **EP 2 831 186 B1**
(45) Veröffentlichungstag und Bekanntmachung des Hinweises auf die Patenterteilung: **19.06.2019**
(21) Anmeldenummer: 13717706.9
(22) Anmeldetag: 27.03.2013
(51) Int. Cl.: C09D 101/00, C08L 1/08

(54) **FLÜSSIG ANWENDBARE MULTIFUNKTIONALE BESCHICHTUNGSFILME**
MULTIFUNCTIONAL COATING FILMS THAT CAN BE APPLIED IN LIQUID FORM
FILMS DE REVÊTEMENT MULTIFONCTIONNELS POUVANT ÊTRE APPLIQUÉS SOUS UNE FORME LIQUIDE

(30) Priorität: 28.03.2012 DE 102012006171
(43) Veröffentlichungstag der Anmeldung: 04.02.2015
(73) Patentinhaber: Thüringisches Institut Für Textil- Und Kunststoff- Forschung E.V., 07407 Rudolstadt (DE)
(72) Erfinder: SCHALLER, Jens, 99510 Herressen (DE); STENGEL, Knut, 99444 Blankenhain (DE); MEISTER, Frank, 07407 Rudolstadt (DE); RIEDE, Sabine, 07407 Uhlstädt-Kirchhasel (DE)
(74) Vertreter: Plate, Jürgen
(86) Internationale Anmeldenummer: PCT/EP2013/000930
(87) Internationale Veröffentlichungsnummer: WO 2013/143696

(56) Entgegenhaltungen:
- EP-A1- 1 316 563
- EP-A1- 1 698 224
- WO-A1-2009/153275
- WO-A2-2008/112419
- GB-A- 698 948
- US-A- 2 329 741
- US-A- 2 988 455

## Beschreibung

Die vorliegende Erfindung betrifft flüssig anwendbare Multifunktionsfilme auf der Basis von homo-und heteroglycanischen Materialien zur Ver- und Abdichtung, zur Abdeckung sowie zur Konservierung von Oberflächen wie beispielsweise Ackerböden, um nicht erwünschten Bewuchs zu verhindern, Gebäudehüllen und Holzkonstruktionen im Dachbereich oder an Orten erhöhter Kondenswasserbildung, wie sie u.a. im Bereich hinterlüfteter Fassaden zu finden sind bzw. im kosmetisch, medizinischen Bereich zur Abdeckung von Körperoberflächen.

Verbautes, Feuchtigkeit exponiertes Holz ist generell einer langsamen bakteriell verursachten Rotte bzw. auch einem Pilzbefall ausgesetzt und wird über einen längeren Zeitraum abgebaut. Durch Absenken des Feuchtigkeitsgehaltes bis auf ca. 12% ebenso wie durch die Behandlung mit Bioziden lässt sich der Abbau verzögern. In letzterem Fall hat man dann allerdings einen recht hydrophilen Werkstoff, da natürlich verbautes Holz immer eine gewisse Menge Wasser resorbiert.

Kritisch zu betrachten ist ebenfalls Holz, welches zwar äußerlich trocken aber immer noch über eine gewisse Kernfeuchte verfügt und mit Oberflächenbeschichtungen versiegelt wurde, welche nur eine geringe Wasserdampfdurchlässigkeit besitzen. Bekannt für eine erhaltende Behandlung derartiger Oberflächen sind lediglich Mittel zur Konservierung von verbauten Hölzern mittels biozider Produkte bzw. Anstriche, die in der Regel allerdings nicht allen Problemen des Holz- und Umweltschutzes gerecht werden. Allgemein wird deshalb der Wirkungsgrad der bekannten Oberflächenbeschichtungen als zu gering beschrieben.

Bekannt ist weiterhin, dass beim gegenwärtigen Stand der Technik bevorzugt Polyolefin-, PET-, PA- und PVC-Folien als Beschichtungsfilme zur Ver- und Abdichtung sowie Abdeckung von Oberflächen und als Feuchtigkeits-, Dampf- und Wärmesperre in der Bau-, Land- sowie Forstwirtschaft, aber auch im Garten- und Landschaftsbau eingesetzt werden. Nachteilig ist dabei der hohe manuelle Aufwand beim Ver- oder Abdecken, insbesondere bei komplexen Oberflächengeometrien oder besonderen konstruktiven Strukturen (Siloabdeckungen, Ernteverfrühungsfolien, usw.).

Alternativ zu diesem Stand der Technik beschreibt die Offenlegungsschrift DE 10 2009 049 284 eine zumindest bereichsweise durch Sprühen oder Streichen aufbringbare Folie als Funktionsschicht einer Gebäudehülle und Dampfsperre für Holzkonstruktionen.

Dort werden Kunststoffdispersionen auf der Basis von synthetischen Polymeren, bevorzugt Acrylat/Methacrylat oder Polyurethan, genutzt. Als nutzbarer Kunststoff wird auch Cellulose erwähnt, aber es fehlt jegliche Lehre zu Folien auf Basis von Cellulose im Sinne von zumindest bereichsweise durch Sprühen oder Streichen aufbringbaren Folienabschnitten und deren mögliche Ausführungsformen.

Die Folienbildung aus der aufgebrachten Dispersionsschicht beruht bevorzugt auf physikalisch-mechanischer Verklebung der Kunststoffpartikel beim Verdampfen des Lösungs-/Dispersionsmittels. Deshalb sind die mechanischen Eigenschaften limitiert und nur in sehr engen Grenzen einstellbar. Zur Realisierung der Sprüh- und Folieneigenschaften sind zudem zwingend verschiedene Additive, wie z.B. Entschäumer und Verdicker, notwendig. Eine biologische Abbaubarkeit ist nicht einstellbar. Es werden keine funktionalen Aktivitäten beispielsweise gegen Mikroorganismen sowie Fraßschädlinge beschrieben.

Patent DE 695 23 127 T2 stellt die Erfindung eines vernetzbaren Cellulose-Additivs zur Verwendung in Latex-Anstrichstoffen vor. Bestandteile des Additivs sind Celluloseether, substituiert mit einer hydrophilen Alkengruppierung. Eine Vernetzung ist in diesem Fall nur über biradikalischen Sauerstoff durch Katalysatoren initiiert, möglich. Dieses Additiv dient ausschließlich als Verdickungs- und Rheologie modifizierendes Agens; es fördert die Vernetzung von Latexfarben.

Die Additive dienen der Ablösung von Latex-Zusammensetzungen auf Ölbasis und damit der Ablösung von Anstrichen mit hohem VOC-Gehalt. Der Gehalt an Celluloseether-Additiv in der Latexmatrix beträgt 0,05 bis 3,00 Gew.%. Latex-Polymere bestehen aus unterschiedlichen, im Allgemeinen synthetischen Makromolekülen, meist auf Basis von Acrylaten und sind handelsüblich. Die vernetzbaren Additive werden im Patent durch Umsetzung von einfach bis mehrfach ungesättigten, aromatischen und aliphatischen Glycidyletherderivaten mit Celluloseethern hergestellt. Die Vernetzungsreaktion geschieht hier katalytisch mit MnSO4 bzw. mit CoCl2 durch Additionsreaktion eines cyclischen Ethers.

Patent DE 103 08 236 beschreibt biologisch abbaubare landwirtschaftliche Flüssigfolien auf der Basis von Polyhydroxypolyethern. Diese werden unter erheblichem Aufwand und unter Verwendung giftiger Chemikalien, wie z.B. Ameisensäure, Wasserstoffperoxid, Phosphor- und Schwefelsäure, durch säurekatalytische chemische Reaktionen bei Temperaturen von 80-120 °C hergestellt, was das Kosten/Nutzen Verhältnis belastet. Nach dem Versprühen der Wasser/Aceton- Lösung oder Suspension geschieht die Folienbildung selbst wiederum nur auf rein mechanischem Weg durch Verklebung der Bodenpartikel. Das Anwendungsgebiet ist also auf die Bodenanwendung beschränkt, es entsteht keine Folie mit eigener Stabilität, womit keine weiteren Anwendungen möglich sind. Dem steht auch die nicht genügend steuerbare biologische Abbaubarkeit gegenüber. Darüber hinaus erfolgt die Ausbringung durch Versprühen von Wasser/Aceton-Gemischen, was beispielsweise für die Anwendung im Innenbereich inakzeptabel ist.

DE 10 2005 053 587 beschreibt die Herstellung temporär abbaubarer Folien für die Landwirtschaft auf Basis einer Alkalisilikatlösung bzw. -dispersion, der biologisch abbaubare, native Oligopolyole beigemischt werden. Die Herstellung der Sprühlösung geschieht in mehreren Schritten und ist aus chemisch-technologischer Sicht äußerst aufwändig (Temperaturen bis 200 °C, Verwendung 50 %-iger Kalilauge, Filtrationsprozesse) . Trotz der Verwendung von Plastifizierungskomponenten sind die mechanischen Eigenschaften nur begrenzt einstellbar. Silikate ergeben naturgemäß spröde und harte Formkörper.

Schließlich beschreibt US-PS 2,329,741 die Herstellung von Folien aus Hydroxyalkylcellulosen durch Vernetzungsreaktionen mit bifunktionellen Aldehyden. Es wird keine cellulosische Hauptkomponente, wie z.B. Zellstoff, Recycling-Cellulose oder Holzmehl verwendet. Es werden ausschließlich Cellulosederivate vernetzt, wodurch sich eine völlig andere Vernetzungsstruktur ergibt, die kein breites Anwendungsfeld abdecken kann. Darüber hinaus sind die Kosten bei ausschließlicher Verwendung von heteroglycanischen Polysaccharidderivaten insbesondere bei Gellanen und Xanthanen deutlich höher. Die Vernetzung findet bei einer Temperatur von 105°C statt, was eine praktische Nassverarbeitung nahezu unmöglich macht.

Gegenstand der WO 2008/112419 A2 ist eine lagerstabile wässrige Latex-Farbe, die Titanoxid, Vinyl-Acryl- , Acryl-Latex und PVC enthält. Eine Vernetzung durch Acetal- oder Ketalbildung findet in diesem System nicht statt. Ebenso wenig werden Spacerverbindungen im vorgenannten Patent genannt, die chemisch in Sprühfilme eingebunden sind und ihrerseits bereits biologische und brandhemmende Eigenschaften aufweisen und außerdem die physikalischen Eigenschaften der Beschichtung in Abhängigkeit von der Art des Polyols beeinflussen. Ebenfalls dürfte keine chemische Vernetzung mit der zu beschichtenden Oberfläche durch die Latex-Farbe stattfinden; falls doch, dann auf eine wesentlich andere Art als eine Acetalisierung bzw. Ketalisierung.

Die Hauptkomponenten dieser Beschichtung sind Wasser, Polyvinylchlorid, Acryl-Latex, Vinyl-Acryl-Latex und TiO2, Cellulosederivate sind nur untergeordnete Bestandteile.

Aufgabe der vorliegenden Erfindung war es demnach, flüssig anwendbare Multifunktionsfilme auf der Basis von polysaccharidischen Materialien zur Ver- und Abdichtung, zur Abdeckung sowie zur Konservierung von Oberflächen wie beispielsweise Ackerböden, Gebäudehüllen und Holzkonstruktionen im Dachbereich oder an Orten erhöhter Kondenswasserbildung, wie sie u.a. im Bereich hinterlüfteter Fassaden auftreten, zu finden. Weitere Aufgabe der vorliegenden Erfindung war es, dabei die Nachteile der im Stand der Technik bekannten technischen Lösungen zu vermeiden und kostengünstige und unter den typischen Applikationstemperaturen einsetzbare, ausreichend mechanisch stabile, notwendig dichte und mit zusätzlichen Funktionalitäten ausgestattete Filme zu entwickeln. Als Landwirtschaftsfolie eingesetzt, sollen die mikrobiologischen Parameter des Bodens nicht negativ beeinflusst werden. Darüber hinaus galt es, durch die Wahl der Zusammensetzung Feuchtigkeitsbindung, mechanische Kennwerte, Bioabbaubarkeit, Porengrößen, usw. entsprechend des jeweiligen Anwendungsgebietes in weiten Grenzen anpassen zu können. Diese Aufgabe wird gelöst durch den Gegenstand des Anspruchs 1.

Durch Umsetzung von Polysaccharid-Materialien, und/oder wasserlöslichen Polysaccharidderivaten und polyolischen Spacern mit Vernetzern, die eine oder mehrere Carbonyl- und/oder Carboxylfunktionen besitzen, gelingt es, mechanisch stabile und mehr oder minder flexible Filme zu bilden, die bis zu einem zusätzlichen Fremdstoffanteil von 80 % ihre mechanischen Eigenschaften beibehalten.

Die Polysaccharidmaterialien umfassen sowohl homoglycanische, als auch heteroglycanische Materialien, wasserunlösliche Recyclingcellulose, z.B. gemahlenes Altpapier, Cellulosefasern oder Holzmehl und wasserlösliche Polysaccharidderivate. Wasserlösliche Polysaccharidderivate sind insbesondere Cellulosederivate und umfassen beispielsweise Methylcellulose Carboxymethylcellulose-Natrium, Carboxymethylcellulose in der Säureform, Hydroxyethylcellulose. Stärkederivate gehören auch zu den wasserlöslichen Polysaccharidderivaten, bevorzugt Hydroxyethylstärke. Heteroglycanische Materialien sind bevorzugt Xanthan, Gellan und Hyaluronsäure. Zu den besonders geeigneten Polysaccharidderivaten gehören auch Aminogruppen tragende Polysaccharide wie Aminocellulose und Chitosan. Fremdstoffe können nichtreaktive organische oder anorganische Substanzen oder funktionale Additive sein.

Die stabile Filmschicht entsteht nach acetalischer bzw. ketalischer Verknüpfung der Komponenten unter Wasserabspaltung bei Temperaturen über 10°C durch das Vernetzen freier Aldehyd- bzw. Ketogruppen der multifunktionalen Beschichtungsfilme mit den funktionellen Gruppen der zu beschichtenden Oberflächen, was eine zusätzliche Stabilisierung der multifunktionalen Beschichtungsfilme bewirkt. Die multifunktionale Schicht ist wasser- und UV-Licht beständig. Die als Spacer fungierenden Polyole sind bevorzugt natürlichen Ursprunges und beeinflussen durch ihre Funktionalität bzw. ihre sterische Ausbildung die Elastizität und Quellfähigkeit der Folien. Bei Verwendung von Tanninsäure als Polyol wird die Entflammbarkeit der Folien fast vollständig unterbunden. Die Filme sind durchlässig für Wasserdampf, kontrolliert quellbar und können entsprechend des Vernetzungsgrades und des eingesetzten Spacers bis zu 75 % Wasser, bezogen auf die Trockenmasse, binden.

Erfindungsgemäß werden dispergierbare, aber wasserunlösliche Feststoffe, wie beispielsweise polysaccharidische Materialien und/oder wasserlösliche Polysaccharid-Derivate mit polyolischen Spacern und Vernetzern in einer Eintopfsynthese vermischt. Es entsteht eine zunächst lagerstabile wässrige Dispersion, die noch wasserlöslich und reaktiv bleibt. Nach flüssiger Applizierung als Beschichtungsfilm auf Oberflächen erfolgt die Aushärtung durch quantitative acetalische bzw. ketalische Vernetzung. Beim Einsatz von CMC-Na in saurem Medium erfolgt die Aushärtung durch die Ausbildung der Säureform, wodurch überraschenderweise eine zusätzliche irreversible Stabilisierung der Folien nach dem Ausbilden der Säureform erreicht wird.

Die Aufgabe der polyolischen Spacer besteht darin, die Elastizität des entstehenden Films zu gewährleisten und die Wasseraufnahme und Dampfdurchlässigkeit zu beeinflussen. Geeignete polyolische Spacer umfassen als aliphatische Polyole besonders Ethylenglycol, Propantriol, Triethylenglycol, Polyethylenglycol und Sorbitol, als cyclische Polyole insbesondere Glucose, Fructose und Galactose und als aromatische Polyole besonders Cyanidin, Corilagin, Digallussäure, Tanninsäure und Gallussäure.

Bei den wasserlöslichen Polysaccharidderivaten eignen sich wasserlösliche Celluloseether, besonders bevorzugt Hydroxyalkylcellulosen wie beispielsweise 2-HEC, Carboxymethylcellulosen, Methylcellulosen und Hydroxyethylstärke wie beispielsweise 2-HES. Zu den besonders geeigneten Polysaccharidderivaten gehören auch Aminogruppen-tragende Polysaccharide wie Aminocellulose und Chitosan.

Die Vernetzer sind ausgewählt aus Verbindungen, die eine oder mehrere Carbonyl- und/oder Carboxylfunktionen besitzen und Dialdehyde, Ketone, Diketone, Di-, Tri- oder Tertacarbonsäuren sind und die Dialdehyde Glyoxal, Glutaraldehyd oder Terephthaldialdehyd umfassen.

Besonders geeignete Ketokomponenten sind Aceton und Acetylaceton. Durch die Auswahl eines geeigneten Vernetzers und den Grad der Vernetzung können die Haftung zu der zu beschichtenden Oberfläche und die Abbaubarkeit eingestellt werden. Die Abbaubarkeit richtet sich nach dem Einsatzgebiet der Filme, z.B. ist zur Konservierung und Abdeckung von Gebäudekonstruktionen und Holz keine Abbaubarkeit erwünscht, sondern im Gegenteil sehr lange Standzeiten. Für den Einsatz in der Landwirtschaft dagegen ist eine solche Abbaubarkeit erwünscht, um die Filme nach dem Gebrauch unterpflügen, kompostieren oder anderweitig biologisch entsorgen zu können.

Entsprechend der Färbung der eingesetzten aromatischen Polyole entstehen wasserunlösliche, hellgraue bis schwarze Filme mit einer eigenen Stabilität.

Durch die Umsetzung von polysaccharidischen Materialien und/oder Polysaccharidderivaten mit Vernetzern, die eine oder mehrere Carbonyl- und/oder Carboxylfunktionen besitzen, und polyolischen Spacern entstehen mehr oder minder flexible klare Folien, die bis zu einem Fremdstoffgehalt von 80 % ihre vorteilhaften mechanischen Eigenschaften beibehalten. Fremdbestandteile können nichtreaktive organische oder anorganische Substanzen und/oder funktionelle Additive sein. Eine stabile Folienschicht mit genau einstellbaren Standzeiten entsteht bei typischen Gebrauchstemperaturen.

Eine besonders gute Haftung erhält man durch Applikation der Folienlösung auf porösen Oberflächen, wie Beton, Putz oder auf Oberflächen, die über Hydroxyl-, Carboxyl- oder Aminogruppen verfügen, wie Holz, Glas, Papier, Kunststoffe. Auch auf Metalloberflächen wird eine gute Haftung erzielt.

Bei einem Umsatzgrad der polysaccharidischen Materialien, der Polysaccharidderivate und polyolischen Spacer mit den Vernetzern, die eine oder mehrere Carbonyl- und/oder Carboxylfunktionen besitzen, beispielsweise einer Dialdehydkomponente, einer Mono- bzw. Diketoverbindung oder einer Di-, Tri- bzw. Tetracarbonsäure, kleiner als 81 % sind noch freie Vernetzerfunktionalitäten vorhanden, die mit den funktionalen Gruppen der zu beschichtenden Oberfläche vernetzen. Als Dialdehydkomponenten finden bevorzugt Glyoxal, Glutardialdehyd oder Terephthaldialdehyd, als Ketoverbindung finden bevorzugt Aceton bzw. Acetylaceton Anwendung.

Die mechanisch stabilen, feuchteabsorbierenden und kontrolliert quellbaren Beschichtungsfilme auf den Oberflächen, beispielsweise auf einer Holzoberfläche, entstehen nach acetalischer bzw. ketalischer Verknüpfung der Komponenten unter Wasserabspaltung bei Temperaturen über 10°C. Die Schicht ist wasser- und UV-Licht stabil. Die Funktionsdauer des Beschichtungsfilms kann eingestellt werden.

Alle zur Folienbildung eingesetzten Substanzen sind bevorzugt biologischen Ursprungs. Die Folienschicht ist für Wasserdampf durchlässig und quellfähig und kann entsprechend des eingestellten Vernetzungsgrades und des eingesetzten Spacers bis zu 75 % Wasser, bezogen auf die Trockenmasse, binden.

Die flüssig anwendbaren Multifunktionsfilme auf der Basis von Cellulose bzw. Stärke sind in der Lage, nach dem Auftragen mit den zu beschichtenden Oberflächen unter Ausbildung zusätzlicher acetalischer bzw. ketalischer Bindungen zu reagieren und dadurch eine dauerhafte kovalente Bindung auszubilden. Der dabei entstehende feste Film bildet eine ebenmäßige Struktur aus, dringt in alle Unebenheiten der zu beschichtenden Oberflächen ein und quillt und schwindet entsprechend der Luftfeuchtigkeit ebenfalls wie die beschichteten Oberflächen, so dass diese Schicht nicht wie konventionelle Anstriche oder Kunststofffolien einer Rissbildung unterliegen, sondern auch Oberflächen- oder konstruktiv bedingte Risse oder Spalte bis 6 mm Breite überbrücken können.

Die erfindungsgemäße Lösung beschreibt flüssig anwendbare Multifunktionsfilme zur Ver- und Abdichtung, zur Abdeckung sowie zur Konservierung von Oberflächen wie beispielsweise Ackerböden, Gebäudehüllen und Holzkonstruktionen im Dachbereich oder an Orten erhöhter Kondenswasserbildung, wie sie u.a. im Bereich hinterlüfteter Fassaden zu finden sind.

Durch eine anwendungsbezogene Auswahl der Zusammensetzung der Multifunktionsfilme gelingt es, mechanisch stabile und mehr oder minder flexible Filme zu bilden, die bis zu einem zusätzlichen Fremdstoffgehalt von 80 % ihre mechanischen Eigenschaften beibehalten.

Fremdstoffe der erfindungsgemäßen Beschichtungsfilme können nichtreaktive organische oder anorganische Substanzen wie beispielsweise Bodensubstrat, Lehm, Gestein, Gesteinsmehle, Pigmente, Kunststoffpartikel, o.ä. sein.

Die erfindungsgemäß als Spacer fungierenden Polyole sind bevorzugt natürlichen Ursprungs.

Vernetzungsgrad, Hydrogeleigenschaften, mechanische Festigkeit und Oberflächenhaftung können durch die eingesetzte Menge an Vernetzer, dessen Zahl an funktionellen Gruppen, die Art und Menge des eingesetzten polyolischen Spacers, die Art und Menge der Fremdstoffe und die funktionellen Gruppen der zu beschichtenden Oberflächen in weiten Grenzen angepaßt werden.

Im Fall der Anwendung als Landwirtschaftsfolie lässt sich die Verweildauer im Boden, d.h. die Zeitdauer des Abbaus der erfindungsgemäß flüssig anwendbaren Beschichtungsfilme, durch den Umsetzungsgrad und die Art der chemischen Vernetzung der polysaccharidischen Materialien und/oder der Polysaccharidderivate, und polyolischen Spacer mit dem Vernetzer kontrolliert einstellen. Eine Langzeitstabilität der Folien wird nur bei einem optimalen Vernetzungsgrad erreicht [Tabelle1].

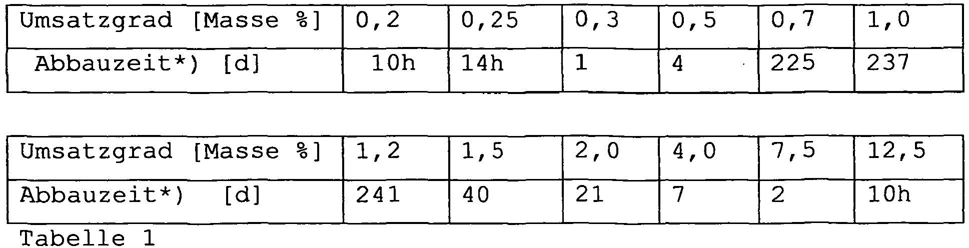

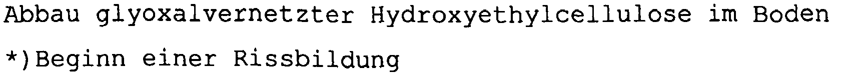

Die Tabelle veranschaulicht, dass je nach Umsatzgrad die Standdauer des biologischen Films eingestellt werden kann. Dabei durchläuft die Standdauer ein Maximum und verringert sich bei höherem Umsatzgrad dann wieder. Andere Kriterien für die Einstellung der Standdauer, d.h. für den Zeitpunkt der Abbaubarkeit, sind die Art des Vernetzters und die verwendeten polysaccharidischen Materialien.

Die besonders im Dach- oder Kellerbereich auftretenden Temperaturschwankungen und damit verbundene Kondenswasserbildung wird durch die Fähigkeit der erfindungsgemäßen Beschichtungsfilme zur Hydrogelbildung verhindert.

Darüber hinaus lässt sich durch den Einsatz der erfindungsgemäßen, flüssig anwendbaren Dampf- und Wärmesperre nicht nur die Arbeitszeit bei Dachisolierungen optimieren, sondern es ergibt sich auch die Möglichkeit bei Altbausanierungen an ansonsten nur mit erheblichem Mehraufwand erreichbaren Orten, Flüssigfolie als Dichtschicht auszubringen.

Die erfindungsgemäß zum Einsatz kommenden Beschichtungsfilme können sowohl bei Neubauten als auch in der Altbausanierung eingesetzt werden.

Die erfindungsgemäß angewandten Polyole werden dem Polymer nicht als kommerziell bekannte Weichmacher zugesetzt, sondern nehmen als Spacer unmittelbar an der Vernetzungsreaktion teil. Die Bindefähigkeit auf Oberflächen hängt vom erreichten Vernetzungsgrad der Folienlösung ab.

Unter Einfluss von natürlichem UV-Licht findet keine Veränderung der Folieneigenschaften statt.

Die erfindungsgemäße Beschichtungsfolie ist ungiftig und ruft bei fachgerechter Anwendung keine Reizungen von Augen, Haut und Schleimhäuten hervor.
Weiterhin zeichnet sich die ausgehärtete Folie dadurch aus, dass sie die Baustoffbrandklasse B2 erfüllt, die Luftdichtigkeit der Folie bei einem Materialeinsatz von 1 l/m² einen Wert von 0,7 - 1,2/h erreichen kann, und für den Diffusionswiderstand der Folien ein sd-Wert von 0,7 - 1,4 m bestimmt wird. Die Dehnfähigkeit der Folie ohne Ablösung von der Holzoberfläche liegt bei einer Spannung von 55 N/mm² bei 60%. Die feste Folie verfügt über eine gute Überlackier- bzw. Überarbeitbarkeit.

Die erfindungsgemäß flüssig applizierbaren Folien haften sehr gut auf Holz, Papier, Glas, Putz, Metall und Kunststoffen, wie z.B. Kunststoff-Folien. Besonders gut ist die Haftung auf Oberflächen von Materialien, die über Hydroxyl-, Carboxyl- oder Aminogruppen verfügen. Mit diesen funktionellen Gruppen gehen die flüssig applizierbaren Folien irreversible Aushärtungsreaktionen unter Abspaltung von Wasser ein.

Auch auf porösen, verschmutzten oder staubigen Oberflächen wird eine sehr gute Haftung der erfindungsgemäßen ausgehärteten Folie erreicht. Die ausgehärtete Beschichtung ist schlag- und kratzfest. Für die Verarbeitung der noch flüssigen bzw. pastösen Beschichtungsfilme eignen sich alle dem Fachmann dafür bekannten Techniken, wie beispielsweise Streichen, Sprühen, Spritzen, Spachteln oder ähnliche.

Die flüssig applizierbaren Folien zeigen multifunktionelle Wirkung und eignen sich entsprechend der stöchiometrischen Zusammensetzung neben der Verwendung als Beschichtungsfilm ebenfalls als Fungizid, Herbizid, Insektizid und Akarizid, sie sind brandhemmend und UV-stabil, dienen als Zusatzkomponente der Stabilisierung von Leichtbauwänden und Lehmkonstruktionen und können bedingt durch ihre Quellfähigkeit Raumfeuchtigkeit abgeben bzw. aufnehmen.

Durch die Art der verwendeten Materialien und die Möglichkeit der Verleihung funktioneller Eigenschaften ist eine Verwendung in der Medizintechnik, aber auch zur Wundheilung oder als Wundauflage und in der kosmetischen Industrie möglich.

Die nachfolgenden Beispiele sollen die Erfindung illustrieren. Prozente sind darin als Gewichtsprozente zu verstehen, soweit nicht anders angegeben oder aus dem Zusammenhang unmittelbar ersichtlich.

### Beispiel 1:

Zur Synthese der flüssig applizierbaren Beschichtungsfilme wird eine 0,1 bis 1 molare, bevorzugt 0,4 bis 0,5 molare Lösung des Cellulosederivates in Wasser hergestellt, mit der gleichen Menge Recycling-Cellulose vermischt und mit conc. Essigsäure auf einen pH-Wert von 2 bis 6, bevorzugt 4 bis 5 angesäuert und mit 0,05 bis 0,5 mol, bevorzugt 0,1 bis 0,3 mol Glyoxal, bezogen auf eine 40%ige Lösung, versetzt, 10 min bei einer Temperatur von 20 bis 50°C, bevorzugt 20 bis 30°C gerührt und anschließend 0,1 bis 0,5 mol, bevorzugt 0,2 bis 0,4 mol der Polyol-Komponente zugegeben und 3 Stunden bei 20 bis 50°C, bevorzugt 30 bis 40°C gerührt. Die so hergestellten Reaktionsgemische sind teilvernetzte, noch wasserlösliche Produkte mit Viskositäten zwischen 0,68 und 1,46 Pa s in einem Temperaturgefälle von 15 bis 30°C. Nach Verdünnen mit Wasser im Verhältnis 1 : 5 erhält man eine sprühfähige Lösung, die als Dampfsperre für Holzkonstruktionen geeignet ist. Das konzentrierte Produkt ist mindestens zwei Jahre ohne Änderung der Eigenschaften lagerfähig.

### Beispiel 2:

Eine 0,1 bis 0,5 molare, bevorzugt 0,3 bis 0,4 molare Lösung der Polyol-Komponente in Wasser wird mit Essigsäure auf pH 3 bis 6, bevorzugt 4 bis 5 eingestellt und mit 0,1 bis 0,5 mol, bevorzugt 0,3 bis 0,4 mol Glyoxal, bezogen auf eine 40%ige Lösung, versetzt, 20 min bei einer Temperatur von 20 bis 50°C, bevorzugt 30 bis 40°C gerührt und mit einer 0,1 bis 1 molaren, bevorzugt 0,4 bis 0,5 molaren, wässrigen Lösung des Cellulosederivates, welches mit der gleichen Menge Recycling-Cellulose vermischt wurde, versetzt und 4 Stunden bei einer Temperatur von 20 bis 50°C, bevorzugt 30 bis 40°C gerührt. Die so hergestellten Reaktionsgemische sind teilvernetzte, noch wasserlösliche Produkte mit Viskositäten zwischen 0,72 und 1,32 Pas in einem Temperaturgefälle von 15 bis 30°C. Nach Verdünnen mit Wasser im Verhältnis 1 : 6 erhält man eine sprühfähige Lösung, die als Dampfsperre für Holzkonstruktionen geeignet ist. Das konzentrierte Produkt ist bis zu zwei Jahren ohne Änderung der Eigenschaften lagerfähig.

### Beispiel 3:

Eine 0,1 bis 1 molare, bevorzugt 0,4 bis 0,6 molare wässrige Lösung des Cellulosederivates wird mit Essigsäure auf pH 3 bis 6, bevorzugt pH 4 bis 5 eingestellt und mit 0,5 bis 1,5 mol, bevorzugt 0,8 bis 1,2 mol Glyoxal, bezogen auf eine 40%ige Lösung versetzt und 10 min bei einer Temperatur von 20 bis 50°C, bevorzugt 30 bis 40°C gerührt. Im Anschluss gibt man 0,1 bis 0,6 mol, bevorzugt 0,3 bis 0,5 mol eines aromatischen Polyols, bevorzugt Tanninsäure, dazu und rührt weitere 60 min bei einer Temperatur von 20 bis 50°C, bevorzugt 30 bis 40°C. Dieses teilvernetzte, noch wasserlösliche Produkt verfügt neben der Eigenschaft der Folienbildung noch über eine herbizide Wirkung gegen monokotyle und dikotyle Pflanzen.

### Beispiel 4:

Zur Synthese wird eine 0,1 bis 1 molare, bevorzugt 0,4 bis 0,5 molare Lösung des Cellulosederivates in Wasser hergestellt, mit konz. Essigsäure auf einen pH-Wert von 2 bis 6, bevorzugt 4 bis 5 angesäuert und mit 0,1 bis 0,5 mol, bevorzugt 0,2 bis 0,3 mol Glyoxal oder Glutardialdehyd, bezogen auf eine 40%ige Lösung, versetzt, 10 min bei einer Temperatur von 20 bis 50°C, bevorzugt 20 bis 30°C gerührt, Zu dieser Lösung gibt man anschließend 0,1 bis 0,8 mol, bevorzugt 0,3 bis 0,6 mol eines aromatischen Polyols, bevorzugt Tanninsäure und rührt weitere 60 min bei einer Temperatur von 20 bis 50°C, bevorzugt 30 bis 40°C. Das noch wasserlösliche Produkt verfügt neben der Eigenschaft der Folienbildung noch über eine fungizide Wirkung gegen Ceratocystis sp. Heterobasidiumannosum, Disculapinicola, Fungi imperfecti und Candida albicans. [Tabelle 2][Bestimmung nach DIN 58940-84, Ausgabedatum: 2002-10 Medizinische Mikrobiologie - Empfindlichkeitsprüfung von mikrobiellen Krankheitserregern gegen Chemotherapeutika - Teil 84: Mikrodilution; Spezielle Anforderungen an die Testung von Pilzen gegen Antimykotika]

**Tab. 2.1 Fungizide Wirkung von HEC-Corilagin bei einem Substitutionsgrad von 0,35**

| HEC-Corilagin 10 µg | Ceratocystiss p. | Heterobasidionannosum | Disculapinicola | Fungi imperfecti | Candida albicans |
|---|---|---|---|---|---|
| Hemmhofdurchmesser [mm] | 21 | 27 | 22 | 18 | 26 |

**Tab. 2.2 Fungizide Wirkung von HEC-Cyanidin bei einem Substitutionsgrad von 0,35**

| HEC-Cyanidin. 10 µg | Ceratocystiss p. | Heterobasidionannosum | Disculapinicola | Fungi imperfecti | Candida albicans |
|---|---|---|---|---|---|
| Hemmhofdurchmesser [mm] | 16 | 19 | 14 | 13 | 11 |

**Tab. 2.3 Fungizide Wirkung von HEC-Cyanidin bei einem Substitutionsgrad von 0,35**

| HEC-Digallussäure 10 µg | Ceratocystiss p. | Heterobasidionannosum | Disculapinicola | Fungi imperfecti | Candida albicans |
|---|---|---|---|---|---|
| Hemmhofdurchmesser [mm] | 18 | 27 | 29 | 16 | 13 |

**Tab. 2.4 Fungizide Wirkung von HEC-Corilagin bei einem Substitutionsgrad von 0,7**

| HEC-Corilagin 10 µg | Ceratocystiss p. | Heterobasidionannosum | Disculapinicola | Fungi imperfecti | Candida albicans |
|---|---|---|---|---|---|
| Hemmhofdurchmesser [mm] | 34 | 41 | 37 | 28 | 39 |

**Tab. 2.5 Fungizide Wirkung von HEC-Cyanidin bei einem Substitutionsgrad von 0,7**

| HEC-Cyanidin. 10 µg | Ceratocystiss p. | Heterobasidionannosum | Disculapinicola | Fungi imperfecti | Candida albicans |
|---|---|---|---|---|---|
| Hemmhofdurchmesser [mm] | 22 | 31 | 21 | 19 | 14 |

**Tab. 2.6 Fungizide Wirkung von HEC-Digallussäure bei einem Substitutionsgrad von 0,7**

| HEC-Digallussäure 10 µg | Ceratocystiss p. | Heterobasidionannosum | Disculapinicola | Fungi imperfecti | Candida albicans |
|---|---|---|---|---|---|
| Hemmhofdurchmesser [mm] | 28 | 38 | 39 | 21 | 18 |

### Beispiel 5:

Eine 0,4 bis 1,0 molare, bevorzugt 0,6 bis 0,8 molare wässrige Lösung des Polysaccharidderivates wird mit conc. Essigsäure auf einen pH-Wert von 2,5 bis 6,5 bevorzugt 4 bis 5 angesäuert und anschließend mit soviel Aceton versetzt bis das wasserlösliche Polysaccharidderivat auszufallen beginnt. Die noch klare Lösung wird eine Stunde bei 35 bis 55°C, bevorzugt 50°C gerührt und danach mit 0,4 bis 0,9 mol, bevorzugt 0,7 mol einer wässrigen Lösung eines aromatischen Polyols, bevorzugt Tanninsäure versetzt und weitere 20 bis 40 min, bevorzugt 30 min bei dieser Temperatur gerührt. Das noch wasserlösliche Produkt bildet nach der vollständigen Entfernung von Wasser aus dem Reaktionssystem wasserunlösliche flexible Folien.

### Beispiel 6:

Eine 0,2 bis 1,2 molare, bevorzugt 0,8 bis 1,0 molare wässrige Lösung des Polysaccharides wird mit conc. Essigsäure auf einen pH-Wert von 3 bis 7 bevorzugt 4 bis 6 angesäuert und anschließend mit soviel Acetylaceton versetzt bis das wasserlösliche Polysaccharid auszufallen beginnt. Die noch klare Lösung wird 2 bis 6 Stunden, bevorzugt 4 Stunden bei einer Temperatur von 40 bis 80°C, bevorzugt 60°C gerührt und danach mit einer 0,8 bis 1,2 molaren, bevorzugt 1 molaren wässrigen Lösung eines aromatischen Polyols, bevorzugt Tanninsäure versetzt und weitere 60 bis 120 min, bevorzugt 80 min bei dieser Temperatur gerührt. Das noch wasserlösliche Produkt bildet nach der vollständigen Entfernung von Wasser aus dem Reaktionssystem wasserunlösliche flexible Folien.

## Patentansprüche

1. Flüssig anwendbare multifunktionale Beschichtungsfilme zur Ver- und Abdichtung, zur Abdeckung sowie zur Konservierung von Oberflächen, **gekennzeichnet dadurch, dass** sie eine Zusammensetzung aus homo- oder heteroglycanischen wasserlöslichen Polysaccharidderivaten, polyolischen Spacern und Vernetzern mit mindestens einer Carbonyl- oder Carboxylfunktion umfassen, wobei die Vernetzer Dialdehyde, Ketone, Diketone, Di-, Tri- oder Tetracarbonsäuren sind und die Dialdehyde Glyoxal, Glutardialdehyd oder Terephthaldialdehyd umfassen, die Zusammensetzung zum Zeitpunkt ihrer Ausbringung wasserlöslich und reaktionsfähig ist, nach ihrer Aushärtung wasseraufnahme- bzw. quellfähig, wasserdampfdurchlässig, wasser- und UV-stabil bleibt, kontrolliert biologisch abbaubar ist und über zusätzliche Funktionaleigenschaften verfügen, die durch inkorporierte Funktionaladditive induziert werden, wobei die Zusammensetzung noch freie Vernetzerfunktionalitäten aufweist, die mit funktionalen Gruppen der zu beschichtenden Oberfläche vernetzen.

2. Flüssig anwendbare multifunktionale Beschichtungsfilme nach Anspruch 1, **dadurch gekennzeichnet, dass** die Spacer aliphatische, cyclische oder aromatische Polyole sind, bevorzugt Ethylenglycol, Propantriol, Triethylenglycol, Polyethylenglycol, Sorbitol, Glucose, Fructose, Galactose, Cyanidin, Corilagin, Digallussäure, Gallussäure oder Tanninsäure.

3. Flüssig anwendbare multifunktionale Beschichtungsfilme nach Anspruch 1, **dadurch gekennzeichnet, dass** die Vernetzer Ketone sind, bevorzugt Aceton oder Acetylaceton.

4. Flüssig anwendbare multifunktionale Beschichtungsfilme gemäß Anspruch 1, **dadurch gekennzeichnet, dass** die Zusammensetzung wasserunlösliche, polysaccharidische Materialien umfaßt, die natürlichen oder synthetischen Ursprungs sind, wobei Recycling-Cellulose in Form von gemahlenem Altpapier bevorzugt ist.

5. Flüssig anwendbare multifunktionale Beschichtungsfilme gemäß Anspruch 1, **dadurch gekennzeichnet, dass** die wasserlöslichen Polysaccharidderivate Celluloseether, bevorzugt Hydroxyalkylcellulosen, Methylcellulosen und Carboxymethylcellulosen, oder Stärkederivate, bevorzugt Hydroxy-ethylstärke sind.

6. Flüssig anwendbare multifunktionale Beschichtungsfilme gemäß Anspruch 1, **dadurch gekennzeichnet, dass** die Filme quellfähig sind, die Quellfähigkeit der Filme durch die Art des polyolischen Spacers beeinflusst wird und als Hydrogel entsprechend des Vernetzungsgrades bis zu 75 Gew.-% Wasser, bezogen auf ihre Trockenmasse, binden können, ohne die Eigenschaft einer Abdichtschicht zu verlieren.

7. Flüssig anwendbare multifunktionale Beschichtungsfilme gemäß Anspruch 1, **dadurch gekennzeichnet, dass** die Folien bis zu einem Fremdstoffgehalt von 80 Gew.-% ihre mechanischen Eigenschaften beibehalten.

8. Flüssig anwendbare multifunktionale Beschichtungsfilme gemäß Anspruch 1, **dadurch gekennzeichnet, dass** eine konzentrierte wässrige Dispersion (Viskosität > 2,0 Pa s) mindestens zwei Jahre ohne Eigenschaftsänderung lagerfähig ist, die Filme die Baustoffklasse B2 erfüllen, die Luftdichtigkeit der Filme bei einem Materialeinsatz von 1 l/m² einen Wert von 0,7 - 1,2 / h erreicht, für den Diffusionswiderstand der Folien ein sd-Wert von 0,7 - 1,4 m gemessen wird und die Dehnfähigkeit der Filme ohne Ablösung von der Oberfläche bei einer Spannung bis 55 N/mm² zwischen 30 und 60% liegt.

9. Flüssig anwendbare multifunktionale Beschichtungsfilme gemäß Anspruch 1, **dadurch gekennzeichnet, dass** die festen Filme über eine Überlackier- bzw. Überarbeitbarkeit verfügen und auf Holz, Papier, Glas, Putz und Metall haften und die Beschichtung schlag- und kratzfest ist.

10. Flüssig anwendbare multifunktionale Beschichtungsfilme gemäß den Ansprüchen 1 bis 9, **dadurch gekennzeichnet, dass** sie als Funktionsschicht zur Ver- und Abdichtung, zur Abdeckung sowie zur Konservierung von Oberflächen wie beispielsweise Gebäudehüllen und Holzkonstruktionen im Dachbereich oder an Orten erhöhter Kondenswasserbildung anwendbar sind.

11. Flüssig anwendbare multifunktionale Beschichtungsfilme nach Anspruch 1, **dadurch gekennzeichnet, dass** sie herbizide, fungizide, insektizide und akarizide Eigenschaften aufweisen.

12. Flüssig anwendbare multifunktionale Beschichtungsfilme gemäß den Ansprüchen 1 bis 10, **dadurch gekennzeichnet, dass** sie zur Bodenstabilisierung und Bodenabdeckung und zur Unterdrückung nicht erwünschten Bewuchses, im landwirtschaftlichen und gärtnerischen Bereich eingesetzt werden können und die Verweilzeit im Boden in Abhängigkeit von der Zusammensetzung/Vernetzungsgrad und vom Substitutionsgrad einstellbar ist.

13. Verfahren zur Herstellung von flüssig applizierbaren Beschichtungsfilmen auf der Basis von polysaccharidischen Materialien **dadurch gekennzeichnet, dass** dispergierbare, wasserunlösliche Feststoffe, insbesondere cellulosische Materialien und/oder wasserlösliche Polysaccharidderivate, wie Hydroxyethylcellulosen, Methylcellulosen, Carboxymethylcellulosen und Hydroxyethylstärken, mit polyolischen Spacern und mit Vernetzern, die eine oder mehrere Carbonyl- und/oder Carboxylfunktionen besitzen, in einer Eintopfsynthese zu einer zunächst lagerstabilen wässrigen Dispersion gemischt werden und nach flüssiger Applizierung als Beschichtungsfilme auf Oberflächen in saurem Medium quantitativ acetalisch oder ketalisch vernetzen, alle chemischen Umsetzungen im Lösungsmittel Wasser ablaufen und die Vernetzungsreaktion bei Temperaturen ab 10°C stattfindet.

## Claims

1. Multifunctional coating films that can be applied in liquid form for consolidation and waterproofing, for covering and also for preserving surfaces, **characterized in that** they comprise a composition of homo- or heteroglycan water-soluble polysaccharide derivatives, polyol spacers and crosslinkers having at least one carbonyl or carboxyl function, wherein the crosslinkers are dialdehydes, ketones, diketones, di-, tri- or tetracarboxylic acids and the dialdehydes comprise glyoxal, glutardialdehyde or terephthaldialdehyde, the composition at the time of the application thereof is water soluble and reactive, after the curing thereof remains water absorbent or swellable, water vapor permeable, water stable and UV stable, is biodegradable in a controlled manner and have additional functional properties which are induced by incorporated functional additives, wherein the composition still has free crosslinker functionalities which crosslink with functional groups of the surface to be coated.

2. Multifunctional coating films that can be applied in liquid form according to Claim 1, **characterized in that** the spacers are aliphatic, cyclic or aromatic polyols, preferably ethylene glycol, propanetriol, triethylene glycol, polyethylene glycol, sorbitol, glucose, fructose, galactose, cyanidin, corilagin, digallic acid, gallic acid or tannic acid.

3. Multifunctional coating films that can be applied in liquid form according to Claim 1, **characterized in that** the crosslinkers are ketones, preferably acetone or acetylacetone.

4. Multifunctional coating films that can be applied in liquid form according to Claim 1, **characterized in that** the composition comprises water-insoluble, polysaccharidic materials which are of natural or synthetic origin, wherein recycled cellulose in the form of milled waste paper is preferred.

5. Multifunctional coating films that can be applied in liquid form according to Claim 1, **characterized in that** the water-soluble polysaccharide derivatives are cellulose ethers, preferably hydroxyalkyl celluloses, methyl celluloses and carboxymethyl celluloses, or starch derivatives, preferably hydroxyethyl starch.

6. Multifunctional coating films that can be applied in liquid form according to Claim 1, **characterized in that** the films are swellable, the swellability of the films is affected by the type of polyol spacer and, as hydrogel, can bind up to 75 % by weight water, based on the dry matter thereof, corresponding to the degree of crosslinking, without losing the property of a waterproofing layer.

7. Multifunctional coating films that can be applied in liquid form according to Claim 1, **characterized in that** the films retain the mechanical properties thereof up to a foreign matter content of 80 % by weight.

8. Multifunctional coating films that can be applied in liquid form according to Claim 1, **characterized in that** a concentrated aqueous dispersion (viscosity > 2.0 Pa s) is storable for at least two years without change in properties, the films comply with construction material class B2, the airtightness of the films, at a material usage of 1 l/m², reaches a value of 0.7-1.2/h, an sd value of 0.7-1.4 m is measured for the resistance to diffusion of the films, and the extensibility of the films, without detachment from the surface, at a stress up to 55 N/mm², is between 30 and 60 %.

9. Multifunctional coating films that can be applied in liquid form according to Claim 1, **characterized in that** the solid films have overpaintability or overworkability, and adhere to wood, paper, glass, plaster and metal, and the coating is impact- and scratch-resistant.

10. Multifunctional coating films that can be applied in liquid form according to Claims 1 to 9, **characterized in that** they are applicable as a functional layer for consolidation and waterproofing, for covering and also for preserving surfaces such as, for example, building claddings and wood structures in the roof region or at sites of elevated formation of condensate water.

11. Multifunctional coating films that can be applied in liquid form according to Claim 1, **characterized in that** they have herbicidal, fungicidal, insecticidal and acaricidal properties.

12. Multifunctional coating films can be applied in liquid form according to Claims 1 to 10, **characterized in that** they can be used for soil stabilization and soil covering and for suppressing unwanted growth, in the agricultural and gardening sector, and the residence time in the soil is adjustable depending on the composition/degree of crosslinking and on the degree of substitution.

13. Method for producing coating films that can be applied in liquid form on the basis of polysaccharidic materials, **characterized in that** dispersible, water-insoluble solids, in particular cellulosic materials and/or water-soluble polysaccharide derivatives, such as hydroxyethyl celluloses, methyl celluloses, carboxymethyl celluloses and hydroxyethyl starches are mixed with polyol spacers and with crosslinkers which have one or more carbonyl and/or carboxyl functions in a one-pot synthesis to form an initially storage-stable aqueous dispersion and, after liquid application as coating films to surfaces in an acid medium, crosslink quantitatively via acetals or ketals, all chemical reactions proceed in the solvent water and the crosslinking reaction takes place at temperatures from 10 °C.

## Revendications

1. Films de revêtement multifonctionnels applicables sous forme liquide pour le serrage et le colmatage, pour le revêtement ainsi que pour la conservation de surfaces, **caractérisés en ce qu'**ils comprennent une composition de dérivés de polysaccharides homo- ou hétéroglycaniques solubles dans l'eau, d'espaceurs de polyols et d'agents de réticulation avec au moins une fonction carbonyle ou carboxyle, dans lesquels les agents de réticulation sont des dialdéhydes, des cétones, des dicétones, des acides di-, tri- ou tétracarboxyliques et lesdits aldéhydes comprennent du glyoxal, du glutardialdéhyde ou du téréphtaldialdéhyde, la composition est dès sa production soluble dans l'eau et réactive, reste après son durcissement hygroscopique ou gonflable, perméable à la vapeur d'eau, stable à l'eau et aux UV, peut se décomposer biologiquement de manière contrôlée, et disposent de propriétés fonctionnelles supplémentaires qui sont induites par des additifs fonctionnels incorporés, dans lesquels la composition présente encore des fonctionnalités de réticulation libres qui se réticulent avec des groupements fonctionnels de la surface à revêtir.

2. Films de revêtement multifonctionnels applicables sous forme liquide selon la revendication 1, **caractérisés en ce que** les espaceurs sont des polyols aliphatiques, cycliques ou aromatiques, de préférence l'éthylèneglycol, le propanetriol, le triéthylèneglycol, le polyéthylèneglycol, le sorbitol, le glucose, le fructose, le galactose, la cyanidine, la corilagine, l'acide digallique, l'acide gallique ou l'acide tannique.

3. Films de revêtement multifonctionnels applicables sous forme liquide selon la revendication 1, **caractérisés en ce que** les agents de réticulation sont des cétones, de préférence l'acétone ou la cétylacétone.

4. Films de revêtement multifonctionnels applicables sous forme liquide selon la revendication 1, **caractérisés en ce que** la composition comprend des matériaux polysaccharidiques non solubles dans l'eau qui sont d'origine naturelle ou synthétique, dans lesquels la cellulose de recyclage sous la forme de vieux papiers broyés est préférée.

5. Films de revêtement multifonctionnels applicables sous forme liquide selon la revendication 1, **caractérisés en ce que** les dérivés de polysaccharides solubles dans l'eau sont des éthers de cellulose, de préférence des hydroxyalkylcelluloses, des méthylcelluloses et des carboxyméthylcelluloses ou des dérivés d'amidon, de préférence des amidons hydroxyéthyliques.

6. Films de revêtement multifonctionnels applicables sous forme liquide selon la revendication 1, **caractérisés en ce que** les films sont gonflables, la capacité de gonflement des films est influencée par le type de l'espaceur de polyol et peuvent se lier comme hydrogel selon le degré de réticulation avec jusqu'à 75 % en poids d'eau, par rapport à leur masse sèche, sans perdre la propriété d'une couche d'étanchéité.

7. Films de revêtement multifonctionnels applicables sous forme liquide selon la revendication 1, **caractérisés en ce que** les films conservent leurs propriétés mécaniques jusqu'à une teneur en matières étrangères de 80 % en poids.

8. Films de revêtement multifonctionnels applicables sous forme liquide selon la revendication 1, **caractérisés en ce qu'**une dispersion aqueuse concentrée (viscosité > 2,0 Pa) peut être stockée au moins deux ans sans modification de propriété, les films appartiennent à la classe de matériaux de construction B2, l'imperméabilité à l'air des films atteint une valeur de 0,7 à 1,2/h lors d'un apport de matériau de 1 l/m², on mesure pour la résistance à la diffusion des films une valeur sd de 0,7 à 1,4 m et la capacité d'allongement des films sans décollement de la surface se situe à une tension jusqu'à 55 N/mm² entre 30 et 60 %.

9. Films de revêtement multifonctionnels applicables sous forme liquide selon la revendication 1, **caractérisés en ce que** les films solides disposent d'une capacité de revernissage ou de surtraitement et adhèrent à du bois, du papier, du verre, de l'enduit et du métal et le revêtement résiste aux chocs et à l'abrasion.

10. Films de revêtement multifonctionnels applicables sous forme liquide selon les revendications 1 à 9, **caractérisés en ce qu'**ils peuvent être utilisés comme couche fonctionnelle pour le serrage et le compactage, pour le revêtement ainsi que pour la conservation de surfaces telles que, par exemple, des habillages de bâtiments et des structures de bois dans la zone de la toiture ou dans des endroits de formation d'eau de condensation élevée.

11. Films de revêtement multifonctionnels applicables sous forme liquide selon la revendication 1, **caractérisés en ce qu'**ils présentent des propriétés fongicides, insecticides et acaricides.

12. Films de revêtement multifonctionnels applicables sous forme liquide selon les revendications 1 à 10, **caractérisés en ce qu'**ils peuvent être utilisés pour la stabilisation et le revêtement du sol et pour la suppression de salissures non souhaitées dans le domaine agricole et jardinier et le temps de séjour dans le sol peut être réglé en fonction du degré de composition/réticulation et du degré de substitution.

13. Procédé de fabrication de films de revêtement applicables sous forme liquide sur la base de matériaux polysaccharidiques, **caractérisé en ce que** des matériaux dispersables non solubles dans l'eau, en particulier des matériaux cellulosiques et/ou des dérivés de polysaccharides solubles dans l'eau, tels que des hydroxyéthylcelluloses, des méthylcelluloses, des carboxyméthylcelluloses et des amidons hydroxyéthyliques sont mélangés avec des espaceurs de polyols et avec des agents de réticulation qui possèdent une ou plusieurs fonctions carbonyle et/ou carboxyle, dans une synthèse unique pour obtenir une dispersion aqueuse tout d'abord stable au stockage et, après application sous forme liquide comme films de revêtement sur des surfaces, se réticulent en milieu acide quantitativement au plan acétalique ou cétalique, toutes les réactions chimiques se produisent dans un solvant aqueux et la réaction de réticulation a lieu à des températures à partir de 10 °C.
